# EUROPEAN PATENT APPLICATION

(11) **EP 4 848 393 A2**
(43) Date of publication of application: **02.12.2026**
(21) Application number: 26212376.3
(22) Date of filing: 16.04.2019
(51) Int. Cl.: H01M 10/0525

(54) **NEGATIVE ELECTRODE FOR RECHARGEABLE LITHIUM BATTERY, AND RECHARGEABLE LITHIUM BATTERY INCLUDING SAME**

(30) Priority: 20.04.2018 KR 20180046210
(62) Document number(s) of the earlier application(s) in accordance with Art. 76 EPC: 19169561.8 / 3 561 926
(71) Applicant: Samsung SDI Co., Ltd., Yongin-si, Gyeonggi-do 17084 (KR)
(72) Inventor: Lee, Jinhyon, 17084 Yongin-si, Gyeonggi-do (KR); Ka, Bokhyun, 17084 Yongin-si, Gyeonggi-do (KR); Sheem, Kyeuyoon, 17084 Yongin-si, Gyeonggi-do (KR); Ahn, Soonho, 17084 Yongin-si, Gyeonggi-do (KR)
(74) Representative: Gulde & Partner

(57) **Abstract**

Disclosed are a negative electrode (4) for a rechargeable lithium battery (1) comprising a current collector and a negative active material layer disposed on the current collector and including a crystalline carbon-based negative active material. The negative electrode (4) has a peak intensity ratio at a (101)H plane relative to a (004) plane, 1(101)H/I(004), of greater than or equal to 0.4 when X-ray diffraction (XRD) is measured using a CuKα ray, wherein the (101)H plane denotes a peak at 2θ = 44.6 ± 0.2° and the (004) plane denotes a peak at 2θ = 54.7 ± 0.2°, and wherein the XRD is measured under a measurement condition of 2θ = 10° to 80°, a scan rate of 0.044 to 0.089 °/s, and a step size of 0.013 to 0.039 °/step using a CuKα ray as a target ray while a monochromator is removed.

## Description

### CROSS-REFERENCE TO RELATED APPLICATION

This application claims priority to and the benefit of Korean Patent Application No. 10-2018-0046210 filed in the Korean Intellectual Property Office on April 20, 2018.

### BACKGROUND

### 1. Field

A negative electrode for a rechargeable lithium battery and a rechargeable lithium battery including the same are disclosed.

### 2. Description of the Related Art

A rechargeable lithium battery has recently drawn attention as a power source for small portable electronic devices. The rechargeable lithium battery uses an organic electrolyte solution and thereby, have twice as high a discharge voltage as a conventional battery using an alkali aqueous solution and accordingly, high energy density.

As for a positive active material of a rechargeable lithium battery, a lithium-transition metal oxide having a structure capable of intercalating lithium ions, such as LiCoO₂, LiMn₂O₄, LiNi₁₋ₓCoₓO₂ (0 < x < 1), and the like has been used.

As for negative active materials, various carbon-based materials such as artificial graphite, natural graphite, hard carbon, and the like have been used. Recently, a non-carbon-based negative active material such as silicon or tin has been researched in order to obtain high capacity.

### SUMMARY

The present invention is directed to subject matter as defined in the claims.

An embodiment provides a negative electrode for a rechargeable lithium battery having improved electrochemical characteristics such as cycle-life characteristics and rate capability.

Another embodiment provides a rechargeable lithium battery including the negative electrode.

A negative electrode for a rechargeable lithium battery according to an embodiment may provide a rechargeable lithium battery having improved electrochemical characteristics.

### BRIEF DESCRIPTION OF THE DRAWINGS

FIG. 1 is a schematic view showing orientations of negative active materials according to an embodiment.
FIG. 2 is a view showing active and inactive regions of a negative electrode of a rechargeable lithium battery according to an embodiment.
FIG. 3 is a schematic view showing the structure of a rechargeable lithium battery according to an embodiment.
FIG. 4 is a graph showing XRD peaks of the negative electrode according to Example 1 measured using a CuKα ray.
FIG. 5 is a graph showing XRD peaks of the negative electrode according to Comparative Example 1 measured using a CuKα ray.
FIG. 6 is a graph showing capacity retentions obtained by charging and discharging the rechargeable lithium battery cells manufactured according to Examples 1 to 4 and Comparative Examples 1 to 4 while changing C-rates.
FIG. 7 is a graph showing cycle-life characteristics of a rechargeable lithium battery cells manufactured according to Examples 1 to 4 and Comparative Examples 1 to 4.

### DETAILED DESCRIPTION

Hereinafter, embodiments are described in detail. However, these embodiments are exemplary, the present invention is not limited thereto and the present invention is defined by the scope of claims.

A negative electrode for a rechargeable lithium battery according to an embodiment includes a current collector; and a negative active material layer disposed on the current collector and including a carbon-based negative active material; wherein a DD (Degree of Divergence) value defined by Equation 1 is greater than or equal to about 24 and an electrode density is in the range of about 1.0 g/cc to about 1.5 g/cc. [Equation 1] $DD \left(Degree of Divergence\right) = \left({I}_{a}/{I}_{total}\right) * 100$

In Equation 1,
Iₐ is a sum of peak intensities at non-planar angles measured by XRD using a CuKα ray, and
Iₜₒₜₐₗ is a sum of peak intensities at all angles measured by XRD using a CuKα ray.

Herein, the non-planar angles denote 2θ = 42.4±0.2°, 43.4±0.2°, 44.6±0.2°, and 77.5±0.2° when measured by XRD using a CuKα ray, that is, a (100) plane, a (101)R plane, a (101)H plane, and a (110) plane. In general, graphite has a structure classified into a hexagonal structure and a rhombohedral structure having an ABAB type stacking sequence of stacking graphene layers, and the R plane denotes the rhombohedral structure, while the H plane denotes the hexagonal structure.

In addition, all the angles denote 2θ = 26.5±0.2 °, 42.4±0.2 °, 43.4±0.2 °, 44.6±0.2 °, 54.7±0.2 °, and 77.5±0.2 ° when measured by XRD using a CuKα ray, that is, a (002) plane, a (100) plane, a (101)R plane, a (101)H plane, a (004) plane, and a (110) plane. A peak at 2θ = 43.4±0.2 ° may appear when a peak of a (101)R plane of a carbon-based material is overlapped with another peak of a (111) plane of a current collector, for example, Cu.

In general, peak intensity indicates a height of a peak or an integral area of the peak, and according to an embodiment, the peak intensity indicates the integral area of a peak.

In an embodiment, the XRD is measured under a measurement condition of 2θ = 10° to 80 °, a scan rate (°/S) of 0.044 to 0.089, and a step size (°/step) of 0.013 to 0.039 by using a CuKα ray as a target ray but removing a monochromator to improve a peak intensity resolution.

In an embodiment, the DD value of the negative electrode may be greater than or equal to about 24, for example about 24 to about 70 or about 24 to about 60.

The DD value within the above ranges means that the negative electrode active material is not sufficiently laid horizontally with the current collector but is sufficiently oriented to facilitate movement of Li ions in the negative electrode, that is, control of random orientation. When the DD value is less than 24, the DC internal resistance may be increased and rate capability, particularly high rate capability and cycle-life characteristics may be deteriorated.

Further, within the ranges of the DD value, it is possible to suppress an increase in resistance at the discharge end, to minimize a DC internal resistance (DC-IR), and to exhibit improved cycle life characteristics. In addition, electrode expansion may be suppressed during charge and discharge to improve energy density.

In addition, within the ranges of the DD value, it means that the negative active material is oriented at a specific angle with respect to the current collector, and heat generated during charge and discharge of the battery using the negative electrode and heat generated by short-circuiting during penetration or collision may be vertically diffused and may be easily released outside. This may suppress ignition caused by thermal runaway and may suppress an internal temperature increase of the battery, and thus battery characteristics may be improved. When the DD value is less than 24, it indicates that the negative active material is arranged substantially horizontally in the current collector. In this case, generated heat is horizontally diffused, so that it is not easily released outside.

The DD value of the negative electrode within the ranges means that a negative active material included in a negative active material layer is oriented at a predetermined angle, and this DD value is maintained after charges and discharges. In general, in order to orient a negative active material included in a negative active material layer at a predetermined angle, a magnetic field may be applied, while a negative active material composition is coated on a current collector.

In an embodiment, the negative electrode satisfying the DD value may be manufactured by adjusting an intensity of the magnetic field, a time of exposure to the magnetic field, and an electrode plate density during compression of the negative electrode.

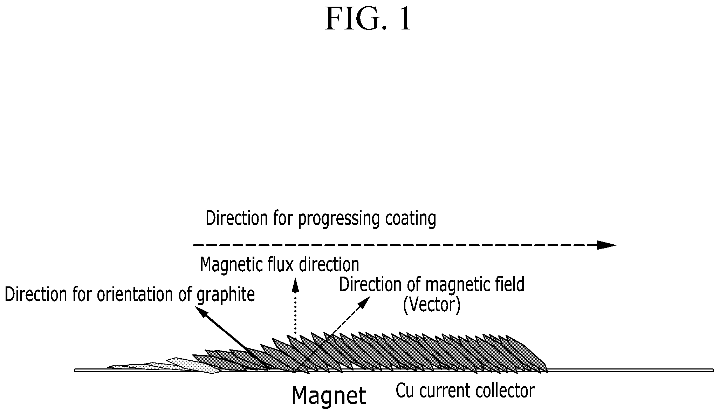

Hereinafter, a method of manufacturing the negative electrode is described. As shown in FIG. 1, the negative electrode is manufactured by placing a current collector on and/or under of a magnet, and then applying a negative active material composition including a negative active material on a current collector, exposing it to a magnetic field, and then drying and compressing.

Herein, the magnet may have an intensity of a magnetic field in a range of about 1000 Gauss to about 10000 Gauss. In addition, the negative active material composition is coated on the current collector and maintained for about 3 seconds to about 9 seconds, that is, is exposed to the magnetic field for about 3 seconds to about 9 seconds. The electrode plate density during compression may be controlled so that the electrode density within the ranges may be obtained. The electrode plate density during compression may be about 1.4 g/cc to about 1.6 g/cc. As used herein, the electrode plate density refers to a density calculated by dividing a loading amount of a measured electrode plate by a thickness of the electrode plate during compression. As described above, the DD value may be adjusted within the ranges by controlling an intensity of the magnetic field, a time of exposure to the magnetic field, and an electrode plate density during compression of the negative electrode.

In particular, when the coating process is performed while the current collector is moved, the magnetic field (magnetic flux) by the magnet may be formed vertically with the current collector, but since the magnetic field according to a coating speed (a speed of moving the current collector) is formed at a predetermined angle as a vector function, the negative active material included in the negative active material composition may stand, that is, be oriented at the predetermined angle on the surface of the current collector.

The negative electrode may have a peak intensity ratio at a (004) plane relative to a (002) plane, that is, I₍₀₀₄₎/I₍₀₀₂₎ of greater than or equal to about 0.04 and specifically, about 0.04 to about 0.07 when XRD is measured by using a CuKα ray. When the negative electrode has I₍₀₀₄₎/I₍₀₀₂₎ of greater than or equal to about 0.04, DC internal resistance may not be increased, but rate capabilities and particularly, high-rate capability may be improved, and cycle-life characteristics may also be improved.

In addition, the negative electrode may have a peak intensity ratio at a (110) plane relative to a (004) plane, that is, I₍₁₁₀₎/I₍₀₀₄₎ of greater than or equal to about 0.3 and specifically, greater than or equal to about 0.1, greater than or equal to about 0.2, about 0.3 to about 0.8, or about 0.3 to about 0.7. When the negative electrode has I₍₁₁₀₎/I₍₀₀₄₎ of greater than or equal to about 0.1, DC internal resistance may not be increased and rate capability, particularly high rate capability, and high-rate cycle-life characteristics may be improved.

In an embodiment, since the DD value is a peak value at a non-plane angles relative to a peak value at all the angles and thus not linked with I₍₁₁₀₎/I₍₀₀₄₎,_{,}the I₍₁₁₀₎/I₍₀₀₄₎ of greater than or equal to about 0.1 does not mean the DD value of greater than or equal to about 24.

The negative electrode may have a peak intensity ratio, that is I_{(101)H}/I₍₀₀₄₎ of (101)H plane relative to (004) plane of greater than or equal to about 0.4, for example about 0.4 to about 3.0. When I_{(101)H}/I₍₀₀₄₎ of the negative electrode is greater than or equal to about 0.4, DC internal resistance may not be increased and rate capability, particularly high rate capability, and high-rate cycle-life characteristics may be improved.

In an embodiment, the DD value is a value obtained by charging/discharging a rechargeable lithium battery including the negative electrode, disassembling the battery in a fully discharged state, and then measuring an XRD of the negative electrode. Herein, the charge and discharge is performed once to twice at 0.1C to 0.2C.

The electrode density of the negative electrode may be about 1.0 g/cc to about 1.5 g/cc, for example, about 1.0 g/cc to about 1.4 g/cc or about 1.0 g/cc to about 1.2 g/cc.

As used herein, the electrode density means a density calculated by dividing a loading amount of a measured electrode by a thickness of the electrode after charging and discharging once or twice at 0.1 C to 0.2 C under a condition that the electrode is sufficiently impregnated with the electrolyte solution.

When the electrode density of the negative electrode is within the ranges, high-rate charge and discharge characteristics, cycle-life characteristics, particularly high-rate cycle-life characteristics may be effectively improved.

The negative electrode may have a single surface loading level (L/L) of about 6 mg/cm² to about 65 mg/cm². Within the range, a desirable electrode density may be easily obtained.

The carbon-based negative active material may be artificial graphite or a mixture of artificial graphite and natural graphite. When the negative active material is a crystalline carbon-based material obtained by mixing natural graphite with artificial graphite or artificial graphite, the crystalline carbon-based material has more developed crystalline characteristics than an amorphous carbon-based active material and thus may further improve orientation characteristics of the carbon material in an electrode plate about an external magnetic field. The artificial graphite or natural graphite may be amorphous, sheet-shaped, flake-shaped, spherically-shaped, fiber-shaped, or a combination thereof without a particular limit. In addition, the artificial graphite is mixed with the natural graphite in a ratio of about 5 : 95 wt% to about 95 : 5 wt%, for example about 70 : 30 wt% to about 30 : 70 wt%.

In addition, the negative active material layer may further include at least one from a Si-based negative active material, a Sn-based negative active material, or a lithium vanadium oxide negative active material. When the negative active material layer further includes these materials, that is, the carbon-based negative active material as a first negative active material and at least one from the negative active material described above as a second negative active material, the first and second negative active materials may be mixed in a weight ratio of about 50 : 50 to about 99 : 1.

The Si-based negative active material may be Si, a Si-C composite, SiOₓ (0 < x ≤ 2), and a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof but not Si), and the Sn-based negative active material is selected from Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof but not Sn), and the like and also, a mixture of at least one thereof with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

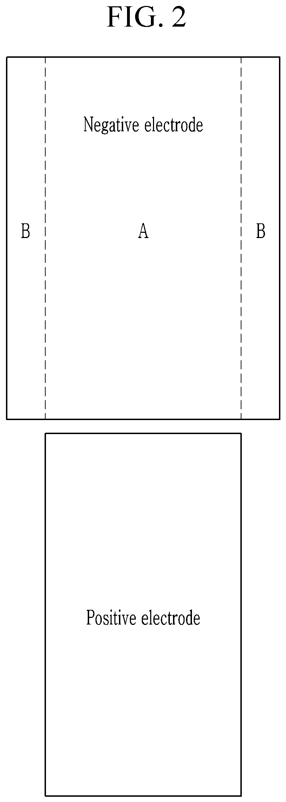

According to another embodiment, the negative electrode may have an active region facing a positive electrode and an inactive region not facing the positive electrode. In other words, as shown in FIG. 2, a region (A) of the negative electrode facing the positive electrode is the active region, and another region (B) of the negative electrode not facing the positive electrode is the inactive region. The reason is that the inactive region where the negative electrode does not face the positive electrode is formed, since the negative electrode is manufactured to be larger than the positive electrode to improve battery safety. However, as the inactive region is generated, safety regarding a short circuit between the positive and negative electrodes due to lithium deposition on the surface of the negative electrode which may occur during charging may be improved, the inactive region has relatively larger resistance of lithium ions than the positive electrode than the active region facing the positive electrode due to a long moving path of lithium ions transmitted from the positive electrode and is present as a non-buffering region. However, the DD value of the inactive region is increased up to 24, lithium may be easily diffused and capacity may be increased due to decrease of the non-buffering region.

Herein, the DD values of the active region and the inactive region may be greater than or equal to about 24, for example, about 24 to about 70, according to an embodiment, the DD value of the only inactive region may be greater than or equal to about 24, for example, about 24 to about 60. When the DD value of the only inactive region is greater than or equal to about 24, the DD value of the active region is not limited.

In the negative active material layer, an amount of the negative active material may be about 95 wt% to about 99 wt% based on a total weight of the negative active material layer.

In an embodiment, the negative active material layer includes a binder, and optionally a conductive material. In the negative active material layer, an amount of the binder may be about 1 wt% to about 5 wt% based on a total amount of the negative active material layer. When the conductive material is further included, about 90 wt% to about 98 wt% of the negative active material, about 1 wt% to about 5 wt% of the binder, and about 1 wt% to about 5 wt% of the conductive material may be used.

The binder improves binding properties of negative active material particles with one another and with a current collector. The binder may be a non-aqueous binder, an aqueous binder, or a combination thereof.

The non-aqueous binder may be polyvinyl chloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The aqueous binder may be a styrene-butadiene rubber, an acrylated styrene-butadiene rubber (SBR), an acrylonitrile-butadiene rubber, an acrylic rubber, butyl rubber, an ethylenepropylene copolymer, polyepichlorohydrine, polyphosphazene, polyacrylonitrile, polystyrene, an ethylenepropylenediene copolymer, polyvinylpyridine, chlorosulfonated polyethylene, latex, polyesterresin, an acrylic resin, a phenolic resin, an epoxy resin, polyvinyl alcohol, an acrylate-based resin, or a combination thereof.

When the aqueous binder is used as a negative electrode binder, a cellulose-based compound may be further used to provide viscosity as a thickener. The cellulose-based compound includes one or more of carboxylmethyl cellulose, hydroxypropylmethyl cellulose, methyl cellulose, or alkali metal salts thereof. The alkali metal may be Na, K, or Li. The thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change in a battery. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof.

A rechargeable lithium battery according to another embodiment includes the negative electrode, a positive electrode, and an electrolyte.

The rechargeable lithium battery may be a high power battery. In other words, the rechargeable lithium battery may be usefully applied to an electronic device requiring high power such as a power tool, an electric vehicle, a vacuum cleaner, and the like. The reason is that the rechargeable lithium battery including the negative electrode according to an embodiment may easily release heat generated during the charge and discharge and particularly, when applied to a high-capacity battery and an electronic device for high power and thus may be suppressed from deterioration due to the heat and effectively used as a high power battery. In addition, the rechargeable lithium battery may easily release heat according to the charge and discharge and be effectively suppressed from a battery temperature increase and thus effectively improve cycle-life characteristics and particularly, cycle-life characteristics at a high rate.

This high power battery may be a cylindrical battery, a prismatic battery, or a pouch-type battery.

The positive electrode may include a positive current collector and a positive active material layer formed on the positive current collector. The positive active material may include lithiated intercalation compounds that reversibly intercalate and deintercalate lithium. Specifically, one or more composite oxides of a metal selected from cobalt, manganese, nickel, and a combination thereof, and lithium may be used. More specifically, the compounds represented by one of the following chemical formulae may be used. LiₐA_{1-b}X_{b}D₂ (0.90 ≤ a ≤ 1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤1.8, 0 ≤ b ≤ 0.5, 0 ≤ c ≤ 0.5, 0 < a ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < a < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < a < 2); LiₐNi_{1-b-c}Mn_{b}X_{c}O_{2-α}T₂ ( 0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNiG_{b}O₂ (0.90 ≤ a ≤ 1.8, 0.001 ≤ b ≤ 0.1) LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); or LiₐFePO₄ (0.90 ≤ a ≤ 1.8).

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed by a method having no adverse influence on properties of a positive active material by using these elements in the compound. For example, the method may include any coating method (e.g., spray coating, dipping, etc.), but is not illustrated in more detail since it is well-known to those skilled in the related field.

In the positive electrode, a content of the positive active material may be about 90 wt% to about 98 wt% based on a total weight of the positive active material layer.

In an embodiment, the positive active material layer may further include a binder and a conductive agent. Herein, the binder and the conductive agent may be included in an amount of about 1 wt% to about 5 wt%, respectively based on the total amount of the positive active material layer.

The binder improves binding properties of positive active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene butadiene rubber, acrylated styrene butadiene rubber, an epoxy resin, nylon, and the like, but are not limited thereto.

The conductive material is included to provide electrode conductivity. Any electrically conductive agent may be used as a conductive material unless it causes a chemical change. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminum, silver, and the like; a conductive polymer such as a polyphenylene derivative; or a mixture thereof.

The current collector may use Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethylacetate, methylpropionate, ethylpropionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone, and the like. The alcohol-based solvent include ethyl alcohol, isopropyl alcohol, and the like, and examples of the aprotic solvent include nitriles such as R-CN (where R is a C2 to C20 linear, branched, or cyclic hydrocarbon, and where R may comprises a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance.

The carbonate-based solvent may include a mixture with a cyclic carbonate and a chain-type carbonate. The cyclic carbonate and chain-type carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

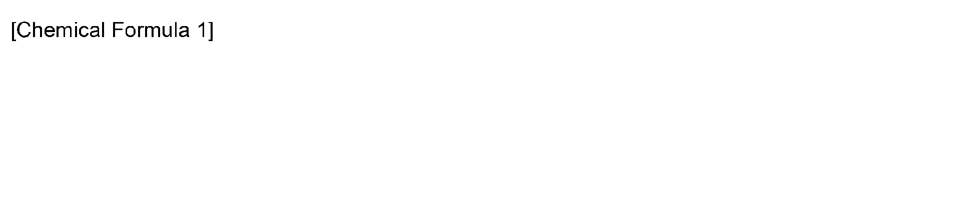

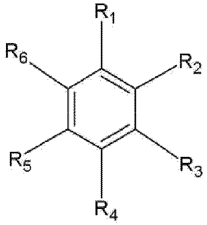

In Chemical Formula 1, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate, an ethylene carbonate-based compound represented by Chemical Formula 2, or propanesultone to improve a cycle life.

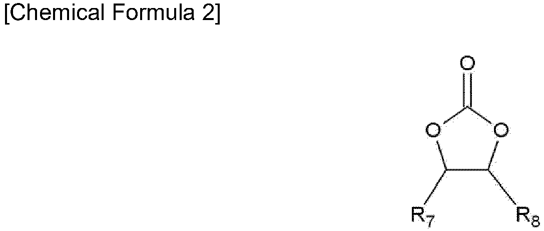

In Chemical Formula 2, R₇ and R₈ are the same or different and may be each independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle life may be flexibly used within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, for example integers of 1 to 20), LiCl, LiI, and LiB(C₂O₄)₂ (lithium bis(oxalato) borate; LiBOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be included between the positive electrode and the negative electrode depending on types of the rechargeable lithium battery. Examples of a suitable separator material include polyethylene, polypropylene, polyvinylidene fluoride, and multilayers thereof such as a polyethylene/polypropylene double-layered separator, a polyethylene/polypropylene/polyethylene triple-layered separator, and a polypropylene/polyethylene/polypropylene triple-layered separator.

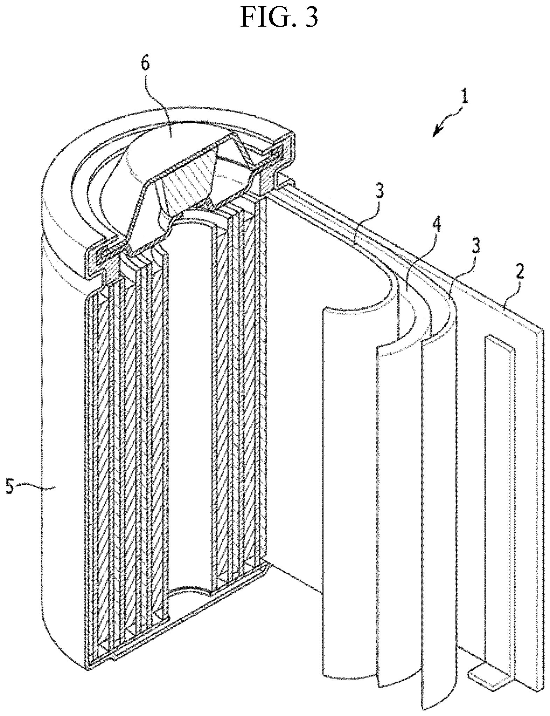

FIG. 3 is an exploded perspective view of a rechargeable lithium battery according to an embodiment. The rechargeable lithium battery shown in FIG. 3 is a cylindrical battery, but the rechargeable lithium battery may be a prismatic battery or a pouch-type battery.

Referring to FIG. 3, a rechargeable lithium battery 1 according to an embodiment includes an electrode assembly including a positive electrode 2; a negative electrode 4; and a separator 3 disposed between the positive electrode 2 and the negative electrode 4; an electrolyte solution (not shown) impregnated in the electrode assembly; a battery case 5 housing the electrode assembly; and a sealing member 6 sealing the battery case 5.

Hereinafter, examples of the present invention and comparative examples are described. These examples, however, are not in any sense to be interpreted as limiting the scope of the invention.

### (Example 1)

97.5 wt% of artificial graphite, 1.5 wt% of a styrene butadiene rubber, and 1 wt% of carboxylmethyl cellulose were mixed in a water solvent to prepare negative active material slurry.

After disposing a Cu foil on a magnet having 3000 Gauss of intensity of a magnetic field, the negative active material slurry was coated on the Cu foil, exposed to the magnetic field for 9 seconds, while the Cu foil was being moved, and then, dried and compressed to manufacture a negative electrode having electrode plate density of 1.45 g/cc and a single surface loading level (L/L) of 6.2 mg/cm².

Positive active material slurry was prepared by mixing 96 wt% of a LiCoO₂ positive active material, 2 wt% of a carbon black conductive material and 2 wt% of a polyvinylidene fluoride binder in a N-methylpyrrolidone solvent. The slurry was coated on an Al substrate and then, dried and compressed to manufacture a positive electrode.

The negative electrode, the positive electrode, and an electrolyte were used to manufacture a pouch-type rechargeable lithium battery cell having cell capacity of 550 mAh and current density of 2.63 mAh/cm². Herein, the electrolyte was prepared by using a mixed solvent of ethylene carbonate and diethyl carbonate (a volume ratio of 50 : 50) in which 1 M LiPF₆ was dissolved.

### (Example 2)

A negative electrode and a rechargeable lithium battery cell using the same were manufactured according to the same method as Example 1 except that the electrode plate density was 1.4 g/cc.

### (Example 3)

A negative electrode and a rechargeable lithium battery cell using the same were manufactured according to the same method as Example 1 except that the electrode plate density was 1.6 g/cc.

### (Example 4)

A negative electrode and a pouch-type rechargeable lithium battery cell using the same were manufactured according to the same method as Example 1 except that the exposure time to the magnetic field was changed from 9 seconds to 5 seconds.

### (Comparative Example 1)

Negative active material slurry was prepared by mixing 97.5 wt% of artificial graphite, 1.5 wt% of a styrene butadiene rubber, and 1 wt% of carboxylmethyl cellulose in a water solvent.

The negative active material slurry was coated on a Cu foil and then, dried and compressed to manufacture a negative electrode having an electrode plate density of 1.45 g/cc and a single surface loading level (L/L) of 6.2 mg/cm².

The negative electrode was used along with the positive electrode and the electrolyte used in Example 1 to manufacture a pouch-type rechargeable lithium battery cell.

### (Comparative Example 2)

A negative electrode and a rechargeable lithium battery cell using the same were manufactured according to the same method as Example 1 except that the electrode plate density was 1.70 g/cc.

### (Comparative Example 3)

A negative electrode and a rechargeable lithium battery cell using the same were manufactured according to the same method as Example 1 except that the electrode plate density was 1.79 g/cc.

### (Comparative Example 4)

A negative electrode and a pouch-type rechargeable lithium battery cell using the same were manufactured according to the same method as Example 1 except that the exposure time to the magnetic field was changed from 9 seconds to 2 seconds.

### (Comparative Example 5)

A negative electrode and a pouch-type rechargeable lithium battery cell using the same were manufactured according to the same method as Example 1 except that the electrode plate density was 1.70 g/cc and the exposure time to the magnetic field was changed from 9 seconds to 6 seconds.

### (Comparative Example 6)

A negative electrode and a pouch-type rechargeable lithium battery cell using the same were manufactured according to the same method as Example 1 except that the electrode plate density was 1.79 g/cc and the exposure time to the magnetic field was changed from 9 seconds to 4 seconds.

### Measurement of X-ray Diffraction Characteristics

The rechargeable lithium battery cells according to Examples 1 to 4 and Comparative Examples 1 to 4 were twice charged and discharged at 0.1 C and then completely discharged down to 2.75 V at 0.1 C. The completely-discharged battery cells were disassembled to obtain negative electrodes. As for these negative electrodes, an X'Pert (PANalytical B.V.) XRD equipment using a CuKα ray as a target ray was used, and a monochromator was removed in order to improve a peak intensity resolution. Herein, the measurement was performed under a condition of 2θ = 10° to 80 °, a scan rate (°/S) = 0.06436, and a step size of 0.026 °/step.

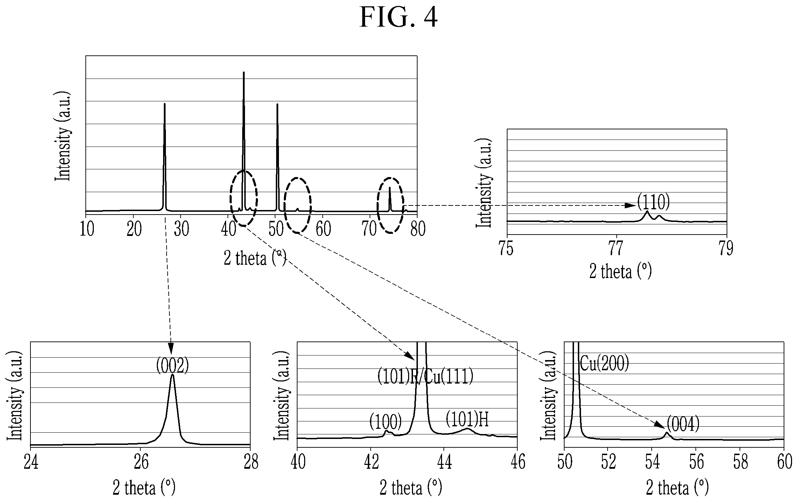

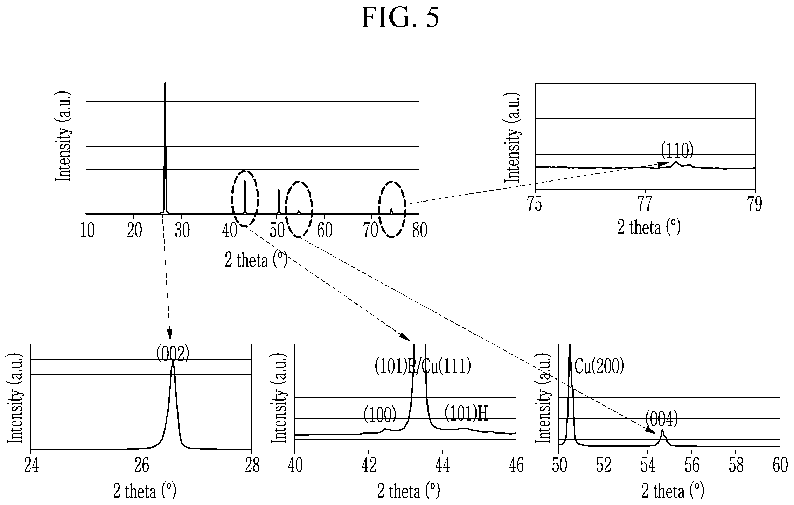

The measured XRD results are shown in FIG. 4 (Example 1) and FIG. 5 (Comparative Example 1). As shown in FIGS. 4 and 5, the negative electrode of Comparative Example 1 showed a higher peak at 2θ=26.5±0.2° than the negative electrode of Example 1. In addition, as shown in FIGS. 4 and 5, the negative electrodes of Example 1 and Comparative Example 1 showed peaks at 2θ=26.5±0.2°((002) plane), 42.4±0.2° ((100) plane), 43.4±0.2° ((101)R plane), 44.6±0.2° ((101)H plane), 54.7±0.2° ((004) plane), and 77.5±0.2° ((110) plane).

As shown in FIGS. 4 and FIG. 5, the areas of the peaks shown at 2θ = 26.5±0.2 ° ((002) plane), 42.4±0.2 ° ((100) plane), 43.4±0.2 ° ((101)R plane), 44.6±0.2 ° ((101)H plane), 54.7±0.2 ° ((004) plane), and 77.5±0.2 ° ((110) plane) were measured, and the results are shown in Table 1. In addition, the area sum of peaks shown at 2θ= 42.4±0.2° ((100) plane), 43.4±0.2° ((101)R plane), 44.6±0.2° ((101)H plane), 77.5±0.2° ((110)plane) as Iₐ, the area sum of peaks shown at 2θ=26.5±0.2°((002) plane), 42.4±0.2°((100) plane), 43.4±0.2°((101)R plane), 44.6±0.2°((101)H plane), 54.7±0.2°((004) plane), and 77.5±0.2°((110) plane) are shown in Table 1 as Iₜₒₜₐₗ and DD values ((Iₐ/Iₜₒₜₐₗ)*100) were calculated therefrom and also shown in Table 1. Furthermore, I₍₀₀₄₎/I₍₀₀₂₎ and I_{(101)H}/I₍₀₀₄₎ were calculated and are shown in Table 1. In particular, peaks corresponding to the (101)R plane of graphite and the (111) plane of a Cu current collector at 43.4±0.2° were overlapped.

**(Table 1)**

| 2θ | Peak plane (peak index) | Peak area | |
|---|---|---|---|
| | | Comparative Example 1 | Example 1 |
| 26.5±0.2° | (002) | 213953.00 | 48241.35 |
| 42.4±0.2° | (100) | 444.15 | 884.48 |
| 43.4±0.2° | (101)R | 38786.60 | 37534.77 |
| 44.6±0.2° | (101)H | 1143.22 | 3961.18 |
| 54.7±0.2° | (004) | 6737.48 | 2135.52 |
| 77.5±0.2° | (110) | 317.47 | 830.47 |
| Iₜₒₜₐₗ | | 261381.90 | 93587.77 |
| Iₐ | | 40691.41 | 43210.90 |
| DD | | 15.60 | 46.20 |
| I₍₀₀₄₎/I₍₀₀₂₎ | | 0.03 | 0.04 |
| I₍₁₁₀₎/I₍₀₀₄₎ | | 0.047 | 0.389 |
| I_{(101)H}/I₍₀₀₄₎ | | 0.169 | 1.855 |

XRD of the rechargeable lithium battery cells according to Examples 2 to 4 and Comparative Examples 2 to 4 were measured according to the same method as those of Example 1 and Comparative Example 1, and used to calculate a DD value, I₍₀₀₄₎/I₍₀₀₂₎, I₍₁₁₀₎/I₍₀₀₄₎, and I_{(101)H}/I₍₀₀₄₎, and the results are shown in Table 2. The DD value, I₍₀₀₄₎/I₍₀₀₂₎, I₍₁₁₀₎/I₍₀₀₄₎, and I_{(101)H}/I₍₀₀₄₎ of the rechargeable lithium battery cells of Example 1 and Comparative Example 1 also are shown in Table 2 for comparison with the above results.

### Measurement of Single Surface Loading Level, Thickness, and Electrode Density

The rechargeable lithium battery cells according to Examples 1 to 4 and Comparative Examples 1 to 4 were twice charged and discharged at 0.1 C and then completely discharged down to 2.75 V at 0.1 C. The completely-discharged battery cells were disassembled to obtain negative electrodes. The loading level (L/L) of the negative electrodes, single surface thicknesses of negative active material layers except current collectors, and electrode density were measured and shown in Table 2.

**(Table 2)**

| | DD value | I₍₀₀₄₎/ I₍₀₀₂₎ | I₍₁₁₀₎/ I₍₀₀₄₎ | I_{(101)H}/ I₍₀₀₄₎ | Single surface loading level (L/L) (mg/cm²) | Thickness (single surface, except the substrate thickness) (µm) | Electrode density (g/cc) |
|---|---|---|---|---|---|---|---|
| Example 1 | 46.20 | 0.04 | 0.389 | 1.855 | 6.2 | 47.7 | 1.3 |
| Example 2 | 52 | 0.041 | 0.6 | 2.76 | 6.1 | 61 | 1.0 |
| Example 3 | 40 | 0.058 | 0.387 | 1.99 | 6.2 | 41.3 | 1.5 |
| Example 4 | 24.6 | 0.0459 | 0.144 | 0.425 | 6.4 | 49.2 | 1.3 |
| Comparative Example 1 | 15.60 | 0.03 | 0.047 | 0.169 | 6.2 | 47.7 | 1.3 |
| Comparative Example 2 | 35 | 0.0478 | 0.201 | 0.09 | 6.1 | 39.4 | 1.55 |
| Comparative Example 3 | 30.8 | 0.044 | 0.235 | 0.957 | 6.3 | 39.4 | 1.6 |
| Comparative Example 4 | 20.8 | 0.051 | 0.08 | 0.21 | 6.5 | 50 | 1.3 |
| Comparative Example 5 | 30.0 | 0.035 | 0.054 | 0.049 | 6.1 | 39.4 | 1.55 |
| Comparative Example 6 | 23.0 | 0.025 | 0.122 | 0.085 | 6.3 | 39.4 | 1.6 |

Referring to Table 2, the negative electrodes according to Examples 1 to 4 exhibited DD values of greater than or equal to 24 (24.6 to 52) and electrode densities of 1.0 g/cc to 1.5 g/cc. In addition, I₍₀₀₄₎/I₍₀₀₂₎ was greater than or equal to 0.04, I₍₁₁₀₎/I₍₀₀₄₎ was in a range of greater than or equal to 0.1, and I_{(101H)}/I₍₀₀₄₎ was in a range of greater than or equal 0.4.

In addition, Comparative Example 5 exhibited a DD value of 30 which is greater than or equal to 24 but I₍₁₁₀₎/I₍₀₀₄₎ of 0.054, which is less than 0.1, Comparative Example 6 exhibited a DD value of 23, which is less than 24 but I₍₁₁₀₎/I₍₀₀₄₎ of 0.122, which is greater than or equal to 0.1, and accordingly, the DD value and the I₍₁₁₀₎/I₍₀₀₄₎ were not interlocked each other. In addition, Comparative Examples 2 and 3 exhibited a DD of 35 and 30.8, respectively but I₍₁₁₀₎/I₍₀₀₄₎ of 0.201 and 0.235, respectively, and accordingly, the DD value was not proportional to the I₍₁₁₀₎/I₍₀₀₄₎.

### Evaluation of Rate Capability

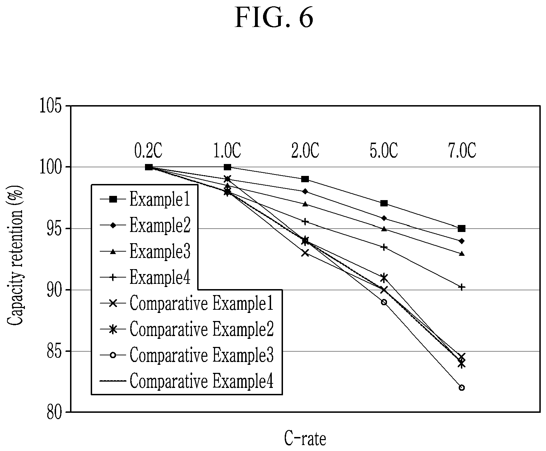

The rechargeable lithium battery cells according to Examples 1 to 4 and Comparative Examples 1 to 6 were respectively once charged and discharged at each C-rate of 0.2 C, 1 C, 2 C, 5 C, and 7 C. Discharge capacity ratios of discharge capacity at each C-rate relative to discharge capacity at 0.2 C according to the rechargeable lithium battery cells regarding Examples 1 to 4 and Comparative Examples 1 to 4 were calculated, and the results are shown in FIG. 6.

Referring to FIG. 6, the rechargeable lithium battery cells according to Examples 1 to 4 satisfying the ranges of a DD value and electrode density (a DD value of greater than 24 (24.6 to 52), electrode density of 1.0 to 1.5 g/cc) showed much excellent rate capability compared with the rechargeable lithium battery cells according to Comparative Examples 1 and 4 not sufficiently satisfying either one range of a DD value and electrode density (a DD value of less than 24, electrode density of 1.0 to 1.5 g/cc) and the rechargeable lithium battery cells according to Comparative Examples 2 and 3 (a DD value of greater than or equal to 24 and electrode density of greater than 1.5 g/cc).

### Evaluation of Cycle-life Characteristics

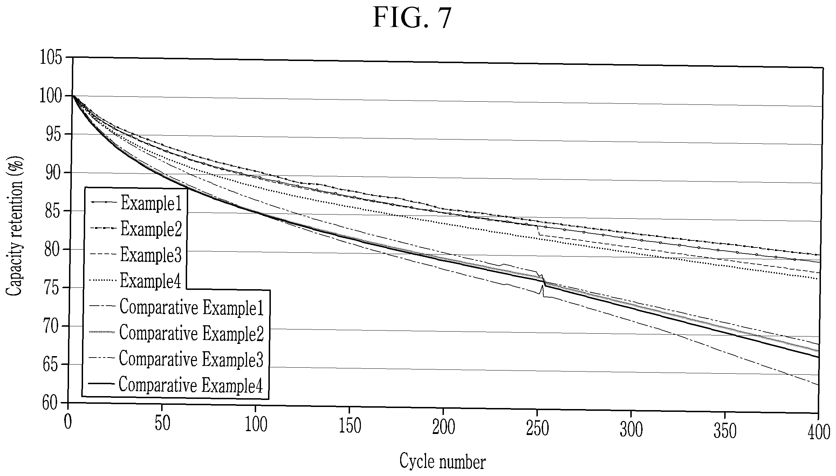

The rechargeable lithium battery cells according to Examples 1 to 4 and Comparative Examples 1 to 6 were constant current/constant voltage charged under a 1.5 C, 4.2 V, and 100 mA cut-off condition, paused for 10minutes, constant current discharged under a 8.75 C and 2.5 V cut-off condition, and paused again for 30 minutes, which is regarded as one charge and discharge cycle, and herein, 400 times charges and discharges were performed. A ratio of discharge capacity at each cycle relative to discharge capacity at the 1^{st} cycle was calculated to obtain a capacity retention depending on a charge and discharge cycle. The results of Examples 1 to 4 and Comparative Examples 1 to 4 are shown in FIG. 7.

As shown in FIG. 7, the rechargeable lithium battery cells according to Examples 1 to 4 satisfying the ranges of a DD value and electrode density (a DD value of greater than or equal to 24 (24.6 to 52) and electrode density of 1.0 to 1.5 g/cc) maintained a capacity retention of greater than or equal to 78 % even at the 400^{th} charge and discharge cycle, but the rechargeable lithium battery cells according to Comparative Examples 1 and 4 not satisfying either one range of a DD value and electrode density (a DD value of less than 24 of electrode density of 1.0 to 1.5 g/cc) and the rechargeable lithium battery cells according to Comparative Examples 2 and 3 (a DD value of greater than or equal to 24 and electrode density of greater than 1.5 g/cc) exhibited a sharply decreased capacity retention of less than 70 % at the 400^{th} charge and discharge cycle.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

In addition to the foregoing explanations, the following enumerated aspects 1 to 15 are also relevant for the present disclosure as part of the specification which must not be confused with the appended claims (that follow after the specification):
Aspect 1: A negative electrode for a rechargeable lithium battery comprising a current collector and a negative active material layer disposed on the current collector and including a carbon-based negative active material. A DD, Degree of Divergence, value defined by Equation 1 is greater than or equal to about 24, and an electrode density is in the range of about 1.0 g/cc to about 1.5 g/cc: [Equation 1] $DD \left(Degree of Divergence\right) = \left({I}_{a}/{I}_{total}\right) * 100$ wherein, in Equation 1, Iₐ is a sum of peak intensities at non-planar angles measured by X-ray diffraction, XRD, using a CuKα ray, and Iₜₒₜₐₗ is a sum of peak intensities at all angles measured by XRD using a CuKα ray.
Aspect 2: The negative electrode for a rechargeable lithium battery of aspect 1, wherein the DD value of the negative electrode is about 24 to about 70.
Aspect 3: The negative electrode for a rechargeable lithium battery of aspect 1, wherein the DD value of the negative electrode is about 24 to about 60.
Aspect 4: The negative electrode for a rechargeable lithium battery of aspect 1, wherein the electrode density of the negative electrode is about 1.0 g/cc to about 1.4 g/cc.
Aspect 5: The negative electrode for a rechargeable lithium battery of aspect 1, wherein the electrode density of the negative electrode is about 1.0 g/cc to about 1.2 g/cc.
Aspect 6: The negative electrode for a rechargeable lithium battery of aspect 1, wherein the negative electrode has a single surface loading level (L/L) of about 6 mg/cm² to about 65 mg/cm².
Aspect 7: The negative electrode for a rechargeable lithium battery of aspect 1, wherein the negative active material layer has a thickness of a single surface except a substrate of about 40 µm to about 650 µm.
Aspect 8: The negative electrode for a rechargeable lithium battery of aspect 1, wherein the negative active material layer has a thickness of a single surface except a substrate of about 40 µm to about 450 µm.
Aspect 9: The negative electrode for a rechargeable lithium battery of aspect 1, wherein the negative active material layer has a thickness of a single surface except a substrate of about 40 µm to about 200 µm.
Aspect 10: The negative electrode for a rechargeable lithium battery of aspect 1, wherein the peak intensities are peak integral area values.
Aspect 11: The negative electrode for a rechargeable lithium battery of aspect 1, wherein the carbon-based negative active material is artificial graphite or a mixture of artificial graphite and natural graphite.
Aspect 12: The negative electrode for a rechargeable lithium battery of aspect 1, wherein the negative active material layer further comprises a Si-based negative active material, a Sn-based negative active material, a lithium vanadium oxide, or a combination thereof.
Aspect 13: The negative electrode for a rechargeable lithium battery of aspect 1, wherein the negative electrode has an active region (A) facing a positive electrode and an inactive region (B) not facing the positive electrode, and a DD value of the inactive region (B) is greater than or equal to about 24.
Aspect 14: A rechargeable lithium battery, comprising the negative electrode of any of aspects 1 to 13; a positive electrode; and an electrolyte.
Aspect 15: The rechargeable lithium battery of aspect 14, wherein the rechargeable lithium battery is a high power battery.

## Claims

1. A negative electrode (4) for a rechargeable lithium battery (1), comprising
a current collector; and
a negative active material layer disposed on the current collector and including a crystalline carbon-based negative active material,
wherein the negative electrode (4) has a peak intensity ratio at a (101)H plane relative to a (004) plane, I(101)H/I(004), of greater than or equal to 0.4 when X-ray diffraction (XRD) is measured using a CuKα ray,
wherein the (101)H plane denotes a peak at 2θ = 44.6 ± 0.2° and the (004) plane denotes a peak at 2θ = 54.7 ± 0.2°, and
wherein the XRD is measured under a measurement condition of 2θ = 10° to 80°, a scan rate of 0.044 to 0.089 °/s, and a step size of 0.013 to 0.039 °/step using a CuKα ray as a target ray while a monochromator is removed.

2. The negative electrode (4) for a rechargeable lithium battery (1) as claimed in claim 1, wherein the peak intensity ratio at a (101)H plane relative to a (004) plane, I(101)H/I(004), is 0.4 to 3.0.

3. The negative electrode (4) for a rechargeable lithium battery (1) as claimed in claim 1, wherein the peak intensity indicates a height of a peak or an integral area of the peak.

4. The negative electrode (4) for a rechargeable lithium battery (1) as claimed in claim 1, wherein the peak intensity indicates an integral area of the peak.

5. The negative electrode (4) for a rechargeable lithium battery (1) as claimed in claim 1, wherein the crystalline carbon-based negative active material is artificial graphite or a mixture of artificial graphite and natural graphite.

6. The negative electrode (4) for a rechargeable lithium battery (1) as claimed in claim 1, wherein an electrode density is in the range of 1.0 g/cc to 1.5 g/cc.

7. The negative electrode (4) for a rechargeable lithium battery (1) as claimed in claim 1, wherein the negative electrode has a DD (Degree of Divergence) value defined by Equation 1 is greater than or equal to about 24. [Equation 1] $DD \left(Degree of Divergence\right) = \left({I}_{a}/{I}_{total}\right) * 100$ wherein, in Equation 1,
Iₐ is a sum of peak intensities at non-planar angles measured by X-ray diffraction, XRD, using a CuKα ray,
wherein the non-planar angles denote 2θ = 42.4±0.2°, 43.4±0.2°, 44.6±0.2°, and 77.5±0.2° and
Iₜₒₜₐₗ is a sum of peak intensities at all angles measured by XRD using a CuKα ray,
wherein all the angles denote non-planar angles 2θ = 42.4±0.2°, 43.4±0.2°, 44.6±0.2°, and 77.5±0.2°, and planar angles 2θ = 26.5±0.2 °, 42.4±0.2 °, 43.4±0.2 °, 44.6±0.2 °, 54.7±0.2 °, and 77.5±0.2 °,
wherein the XRD is measured under a measurement condition of 2θ = 10° to 80 °, a scan rate (°/S) of 0.044 to 0.089, and a step size (°/step) of 0.013 to 0.039 by using a CuKα ray as a target ray.

8. The negative electrode (4) for a rechargeable lithium battery (1) of claim 7, wherein the DD value of the negative electrode (4) is in the range of 24 to 60.

9. The negative electrode (4) for a rechargeable lithium battery (1) of claim 1, wherein the negative electrode (4) has a single surface loading level (L/L) in the range of 6 mg/cm² to 65 mg/cm².

10. The negative electrode (4) for a rechargeable lithium battery (1) of claim 1, wherein the negative active material layer has a thickness of a single surface except a substrate in the range of 40 µm to 650 µm.

11. The negative electrode (4) for a rechargeable lithium battery (1) of claim 1, wherein the negative active material layer has a thickness of a single surface except a substrate in the range of 40 µm to 450 µm.

12. The negative electrode (4) for a rechargeable lithium battery (1) of claim 1, wherein the negative active material layer further comprises a Si-based negative active material, a Sn-based negative active material, a lithium vanadium oxide, or a combination thereof.

13. The negative electrode (4) for a rechargeable lithium battery (1) of claim 1, wherein the negative electrode (4) has an active region (A) facing a positive electrode and an inactive region (B) not facing the positive electrode.

14. A rechargeable lithium battery (1), comprising
the negative electrode (4) of any of claims 1 to 13;
a positive electrode (2); and
an electrolyte.

15. The rechargeable lithium battery (1) of claim 14, wherein the rechargeable lithium battery (1) is a high power battery.
